# DEMANDE DE BREVET EUROPEEN

(11) **EP 3 323 860 A1**
(43) Date de publication de la demande: **23.05.2018**
(21) Numéro de dépôt: 17202154.5
(22) Date de dépôt: 16.11.2017
(51) Int. Cl.: C09D 5/08, C09D 7/40, C08K 7/02, C08K 3/34, C08K 3/22, C08K 3/38

(54) **COMPOSITION DE PROTECTION POUR DES SUBSTRATS A BASE D'ALUMINIUM**

(30) Priorité: 21.11.2016 FR 1661284
(71) Demandeur: Commissariat à l'Energie Atomique et aux Energies Alternatives, 75015 Paris (FR)
(72) Inventeur: DESROUSSEAUX, Stéphanie, 38000 GRENOBLE (FR); MARCELLINI, Aurore, 38000 Grenoble (FR); PONCELET, Olivier, 38000 GRENOBLE (FR)
(74) Mandataire: Nony

(57) **Abrégé**

La présente invention se rapporte à une composition utile à titre de laque de protection, notamment contre la corrosion, pour des substrats à base d'aluminium, comprenant de 0,05 % à 2 % en poids d'au moins un matériau inorganique plaquettaire, par rapport à son poids total, en dispersion dans une solution comprenant au moins un vernis de thermoscellage, les plaquettes dudit matériau inorganique possédant une épaisseur nanométrique et une largeur submicronique.

Elle concerne également des procédés pour former des revêtements de protection et un procédé de protection contre la corrosion.

## Description

La présente invention se rapporte à la protection contre la corrosion des substrats à base d'aluminium, et plus précisément aux substrats à base d'aluminium relevant d'une utilisation dans le domaine de l'emballage alimentaire.

Ces substrats peuvent être utilisés dans l'emballage de pâtes fromagères et ils ont la propriété d'être thermoscellable. A cette fin, ils possèdent un revêtement à base d'une laque de protection possédant une aptitude au contact alimentaire, qui aide à lutter contre la corrosion issue du contact avec les pâtes fromagères. L'une des principales caractéristiques du substrat d'aluminium est la finesse de son épaisseur (de 12 µm à 50 µm).

La protection contre la corrosion de l'aluminium fin, substrat notamment privilégié pour l'emballage des pâtes fromagères, est actuellement assurée par une ou plusieurs couches polymériques.

Ce mode de protection s'avère malheureusement insuffisant pour protéger efficacement l'emballage de l'attaque acide due à la pâte fromagère, notamment lorsque le produit est entreposé à température ambiante dans des régions chaudes, tel que par exemple le Moyen-Orient ou l'Asie. En effet, les substances corrosives contenues dans l'aliment diffusent à travers les couches de polymères de protection et provoque la formation de trous et de défauts dans le substrat d'aluminium fin.

Pour pallier ce problème, l'augmentation de l'épaisseur de la couche de polymère n'est d'une part pas économiquement envisageable et d'autre part risque d'affecter l'aptitude au pliage de la feuille d'aluminium ainsi traitée.

En conséquence, il demeure un besoin d'un mode de protection des substrats à base d'aluminium plus résistant à l'égard des émanations acides, demeurant intéressant sur le plan économique, compatible avec un usage dans le domaine de l'emballage alimentaire et qui avantageusement ne soit pas d'un dimensionnement trop important pour ne pas affecter le pliage du substrat lorsque celui-ci se présente sous la forme d'une feuille d'emballage.

La présente invention vise précisément à proposer une solution à ces attentes.

Plus précisément, la présente invention concerne, selon un de ses aspects, une composition utile à titre de laque de protection, notamment contre la corrosion, pour des substrats à base d'aluminium, comprenant de 0,05 % à 2 % en poids d'au moins un matériau inorganique plaquettaire, par rapport à son poids total, en dispersion dans une solution comprenant au moins un vernis de thermoscellage, les plaquettes dudit matériau inorganique possédant une épaisseur nanométrique et une largeur submicronique.

En particulier, la présente invention est utile dans le domaine de l'emballage de produits alimentaires périssables, et de préférence les pâtes fromagères. Ainsi, la composition est compatible avec une application alimentaire.

Contre toute attente, les inventeurs ont en effet constaté que la présence d'un matériau inorganique au sein d'une solution conventionnelle de vernis de thermoscellage, généralement de nature polymérique, permet d'accéder à une protection renforcée du substrat à base d'aluminium revêtu de ce vernis sous réserve que ce matériau inorganique se présente à un état plaquettaire et qu'il possède des dimensions spécifiques.

En effet, comme il ressort des exemples ci-après, le non respect de ces deux spécificités, à savoir la forme plaquettaire et les dimensions spécifiques de ces plaquettes, conduit à une composition inapte pour obtenir les améliorations recherchées selon l'invention.

Manifestement, la forme et/ou la dimension des plaquettes contribue à créer au sein de la couche de protection générée à partir de la composition selon l'invention une tortuosité et/ou un pavage à l'interface entre le substrat d'aluminium fin et la couche de protection efficace pour limiter efficacement la diffusion des substances corrosives à travers celle-ci.

Comme il ressort des exemples, il est observé avantageusement une diminution ou la disparition de la formation de trous dus à la corrosion dans les substrats fins d'aluminium recouvert d'une ou plusieurs couches d'une composition conforme à l'invention.

Le revêtement formé à partir d'une composition selon l'invention se révèle efficace à partir d'une faible épaisseur. Ce dernier aspect est particulièrement intéressant en termes de coût et de production.

En effet, la forme plaquettaire du matériau inorganique mis en oeuvre dans le cadre de la présente invention permet de conserver des couches de protection dont l'épaisseur est de l'ordre de quelques microns.

Ainsi, les matériaux inorganiques sont plus particulièrement des particules dont la morphologie est celle d'une plaquette, comme par exemple le nitrure de bore hexagonal, le trihydroxyde d'aluminium sous sa forme gibbsite, ou encore des argiles comme le kaolin.

En outre, les autres caractéristiques de la composition, par exemple ses propriétés d'adhésion telle que la température de scellage, ou sa viscosité, ne sont avantageusement pas affectées par la présence d'un tel matériau.

Certes certains de ces matériaux sont déjà connus pour avoir un effet à l'égard de l'aluminium.

Ainsi, le document CN 103773091 décrit des revêtements pulvérulents de haute dureté à base de polypropylène, possédant des propriétés de résistance à la corrosion et comprenant de la gibbsite et du nitrure de bore. US 3 956 212 décrit des compositions de résine éthylénique comprenant du trihydroxyde d'aluminium sous forme gibbsite. FR 79 27003 concerne des dentifrices comprenant un agent abrasif, et par exemple de la gibbsite.

Toutefois, les teneurs en matériaux inorganiques utilisées dans ces documents sont trop importantes, et les revêtements ne sont pas adaptés pour une application d'emballage alimentaire.

Quant à US 7 854 795 qui divulgue des compositions de revêtement non adhésif comprenant du nitrure de bore hexagonal possédant une résistance à la corrosion, ces dernières ne sont pas adaptées à un usage d'emballage alimentaire nécessitant la propriété d'être thermoscellable.

Enfin, EP 2 664 691 décrit des compositions de gravure pouvant contenir de l'hydroxyde d'aluminium cristallin, par exemple de la gibbsite, et CN 102716849 enseigne des revêtements pour des matériaux d'alliage à base d'aluminium comprenant une poudre de céramique, qui peut être du nitrure de bore hexagonal. Néanmoins, la taille des particules décrites dans ces documents est très élevée et n'est pas compatible avec une application alimentaire.

### COMPOSITION

La composition selon l'invention est utile à titre de laque de protection, notamment contre la corrosion, pour des substrats à base d'aluminium.

Ainsi, une composition selon l'invention est avantageusement liquide.

En particulier, une composition selon l'invention possède une viscosité comprise entre 100 cP et 300 cP, de préférence comprise entre 150 cP et 250 cP, mesurée à l'aide d'un viscosimètre de type Brookfield DVII+Pro équipé d'un mobile SC14-18.

Elle est notamment caractérisée pour son aptitude au contact alimentaire. A ce titre, elle permet par exemple de lutter contre la corrosion issue du contact avec les pâtes fromagères.

Les laques de protection permettent de fournir une résistance suffisante contre l'attaque des acides et des bases, et en particulier contre la corrosion.

Une telle laque de protection comprend généralement un vernis de thermoscellage et un solvant organique. Par ailleurs, elle peut également comprendre un plastifiant, notamment un ester acide citrique-glycérol.

Ainsi, une composition selon l'invention comprend au moins une solution contenant au moins un vernis de thermoscellage, et éventuellement en outre un solvant organique et/ou un plastifiant, notamment un ester acide citrique-glycérol.

### Vernis de thermoscellage

Selon l'invention, on entend par « vernis de thermoscellage » un adhésif activable à chaud.

En particulier, le vernis de thermoscellage est activé à une température inférieure à 100 °C, et de préférence inférieure à 70 °C.

A titre de vernis de thermoscellage mis en oeuvre dans une composition selon l'invention, on peut notamment citer les résines ou mélange de résines d'éthylène-acétate de vinyle (EVA), les polymères et copolymères de polychlorure de vinyle, d'acide acrylique ou d'alcool polyvinylique.

De préférence, le vernis de thermoscellage est le polychlorure de vinyle.

### Solvant organique

Comme indiqué précédemment, une laque de protection contient généralement à l'état liquide un solvant organique, de préférence volatil, compatible avec les produits alimentaires.

Ainsi, une composition selon l'invention comprend de préférence en outre un solvant organique, en particulier volatil.

Par exemple, un tel solvant organique peut être choisi parmi l'acétate d'éthyle, l'acétate de n-butyle, l'acétate de méthyle, l'acétate d'amyle, la méthyl isobutyl cétone, la méthyl éthyl cétone, l'éthanol, le propanol, l'isopropanol, le n-butanol, le toluène, l'heptane, l'acétate d'isopropyle et l'hexane, et de préférence parmi la méthyl éthyl cétone et/ou l'acétate d'éthyle.

Plus préférentiellement, le solvant organique est au moins de la méthyl éthyl cétone, et en particulier de la méthyl éthyl cétone ou un mélange de méthyl éthyl cétone et d'acétate d'éthyle.

Le solvant organique est en général destiné à être éliminé, notamment par séchage, après application de la composition selon l'invention.

### MATERIAU INORGANIQUE PLAQUETTAIRE

Comme indiqué précédemment, une composition selon l'invention comprend au moins un matériau inorganique plaquettaire.

Au sens de l'invention, on entend désigner par « matériau inorganique plaquettaire », des composés inorganiques, naturels ou synthétiques se présentant généralement sous la forme d'une poudre dans laquelle les grains ont une forme plate et possèdent une épaisseur nanométrique et une largeur submicronique.

Ainsi, le matériau inorganique plaquettaire est de préférence sous forme pulvérulente. Il est mis en oeuvre dans une composition selon l'invention sous forme d'une dispersion homogène, notamment dans une solution contenant au moins un vernis de thermoscellage.

Un tel matériau inorganique plaquettaire est présent dans une composition selon l'invention en une teneur comprise entre 0,05 % et 2 % en poids, par rapport au poids total de la composition.

Plus préférentiellement, la composition comprend de 0,05 % à 1,5 % en poids de matériau(x) inorganique(s) plaquettaire(s), et de préférence 1 % en poids de matériau(x) inorganique(s) plaquettaire(s), par rapport à son poids total.

Le matériau inorganique est caractérisé par sa forme et par sa taille. Ainsi, il se présente sous formes de plaquettes possédant une épaisseur nanométrique et une largeur submicronique.

Par épaisseur nanométrique, on entend une épaisseur à l'échelle du nanomètre, c'est-à-dire de l'ordre de 10⁻⁹ à 10⁻⁶ m, et en particulier comprise entre 100 nm et 800 nm.

Par largeur submicronique, on entend une largeur inférieure à 1 micron.

Ainsi, selon la présente invention, les plaquettes du matériau inorganique possèdent une épaisseur comprise entre 3 nm et 120 nm et une largeur comprise entre 200 nm et 1 µm.

De préférence, elles possèdent une épaisseur variant de 5 nm à 30 nm, de préférence comprise entre 5 nm et 10 nm.

Les plaquettes du matériau inorganique selon l'invention possèdent également une largeur comprise entre 200 nm et 900 nm, de préférence comprise entre 300 nm et 500 nm.

En outre, ledit ou lesdits matériau(x) inorganique(s) plaquettaire(s) possède(nt) une surface spécifique comprise entre 20 m²/g et 150 m²/g, de préférence comprise entre 30 m²/g et 70 m²/g.

On entend par « surface spécifique », la surface spécifique B.E.T. déterminée par adsorption d'azote conformément à la norme ASTM D 3663-78 établie à partir de la méthode Brunauer - Emmett - Teller décrite dans le périodique « The Journal of the American Chemical Society, 60, 309 (1938) ».

A titre illustratif des matériaux mis en oeuvre dans une composition ou un procédé selon l'invention, on peut notamment citer le nitrure de bore hexagonal (h-BN), le trihydroxyde d'aluminium sous forme gibbsite et les argiles, par exemple le kaolin.

De tels matériaux peuvent être synthétisés ou sont disponibles dans le commerce.

Ainsi, comme trihydroxyde d'aluminium sous forme gibbsite, peuvent notamment être utilisées les particules de gibbsite synthétisées selon le mode opératoire décrit dans Journal of Colloids and Interface Science (292 (2005) 403). De telles particules peuvent être ensuite purifiées par dialyse, la poudre obtenue pouvant être ensuite obtenue par lyophilisation après congélation, par exemple dans de l'azote liquide.

A titre de nitrure de bore hexagonal, on peut citer les particules de h-BN avec une morphologie plaquettaire disponibles dans le commerce auprès de Momentive sous la référence AC6111®.

### SUBSTRAT A BASE D'ALUMINIUM

Une composition selon l'invention est notamment utile à titre de revêtement pour un substrat à base d'aluminium, en particulier pour le protéger contre la corrosion.

Ainsi, la présente invention concerne également un substrat à base d'aluminium, caractérisé en ce qu'il est revêtu en surface en tout ou partie d'une composition telle que définie précédemment.

Un tel substrat est notamment destiné à être utilisé dans le domaine alimentaire.

L'une des principales caractéristiques du substrat à base d'aluminium est la finesse de son épaisseur. De ce fait, il se présente de préférence sous la forme d'une feuille possédant une épaisseur comprise entre 5 µm et 50 µm, de préférence comprise entre 10 µm et 35 µm.

Un tel substrat est avantageusement enduit d'une composition selon l'invention. L'enduction peut par exemple être effectuée à l'aide d'une barre de mayer ou par toute autre technique classiquement utilisée, notamment décrite dans les Techniques de l'Ingénieur.

La composition selon l'invention forme alors un revêtement sur le substrat à base d'aluminium.

Un tel revêtement à l'état liquide possède en particulier une épaisseur comprise entre 10 µm et 20 µm, de préférence comprise entre 12 µm et 18 µm.

Il est entendu que l'épaisseur du revêtement à l'état liquide dépend de plusieurs facteurs, et notamment de l'équipement d'enduction utilisé et de la nature et/ou de la quantité du ou des solvants.

La couche de revêtement à l'état sec possède notamment un grammage compris entre 2 g/m² et 12 g/m², de préférence compris entre 3 g/m² et 6 g/m².

Elle est avantageusement homogène.

### PROCEDES

La présente invention concerne également un procédé utile pour former un revêtement de protection, notamment contre la corrosion, en surface d'un substrat à base d'aluminium, caractérisé en ce qu'il comprend au moins les étapes consistant à :
i) disposer d'une composition liquide comprenant de 0,05 % à 2 % en poids d'au moins un matériau inorganique plaquettaire, par rapport à son poids total, en dispersion dans une solution comprenant au moins un vernis de thermoscellage et un solvant organique, les plaquettes dudit matériau inorganique possédant une épaisseur nanométrique et une largeur submicronique ;
ii) mettre en contact ladite surface dudit substrat avec ladite composition de l'étape i) ;
iii) exposer ledit substrat obtenu à l'issue de l'étape ii) à des conditions propices à l'élimination dudit solvant organique et à la formation, à la surface dudit substrat, d'un revêtement comprenant ledit ou lesdits matériau(x) inorganique(s) plaquettaire(s).

En particulier, l'étape iii) est une étape de séchage.

De préférence, l'étape iii) est réalisée à une température variant de 25 °C à 60 °C, et plus particulièrement de 35 °C à 50 °C. Elle peut notamment être réalisée pendant une durée comprise entre 3 minutes et 10 minutes.

Selon une variante particulière de la présente invention, l'ensemble des étapes ii) et iii) est renouvelé au moins une fois à l'issue de l'étape iii). Par exemple, l'ensemble des étapes ii) et iii) peut être renouvelé une fois, deux fois ou trois fois à l'issue de l'étape iii), en particulier une fois.

Selon une autre variante de la présente invention, les étapes ii) et iii) ne sont pas renouvelées.

Selon un autre aspect, la présente invention concerne un procédé utile pour former un revêtement de protection, notamment contre la corrosion, en surface d'un substrat à base d'aluminium, caractérisé en ce qu'il comprend au moins les étapes consistant à :
i) disposer d'au moins un matériau inorganique plaquettaire, les plaquettes dudit matériau inorganique possédant une épaisseur nanométrique et une largeur submicronique, et étant en dispersion dans au moins un solvant organique ;
ii) mettre en contact ladite surface dudit substrat avec ladite dispersion de l'étape i) ;
iii) exposer ledit substrat obtenu à l'issue de l'étape ii) à des conditions propices à l'élimination dudit solvant organique ;
iv) mettre en contact ledit substrat obtenu à l'issue de l'étape iii) avec une solution comprenant au moins un vernis de thermoscellage et un solvant organique ;
v) exposer ledit substrat obtenu à l'issue de l'étape iv) à des conditions propices à l'élimination dudit solvant organique et à la formation, à la surface dudit substrat, d'un revêtement.

En particulier, les étapes iii) et v) sont des étapes de séchage.

De préférence, l'étape iii) est réalisée à une température variant de 25 °C à 60 °C, et plus particulièrement de 35 °C à 50 °C. Elle peut notamment être réalisée pendant une durée comprise entre 3 minutes et 10 minutes.

En particulier, l'étape v) est réalisée à une température variant de 25 °C à 60 °C, et plus particulièrement de 35 °C à 50 °C. Elle peut être réalisée pendant une durée comprise entre 3 minutes et 10 minutes.

Selon encore une autre variante de réalisation, la présente invention concerne un procédé de protection contre la corrosion d'un substrat à base d'aluminium, caractérisé en ce qu'il comprend au moins une étape de revêtement en surface dudit substrat par une composition telle que définie précédemment.

L'invention va maintenant être décrite au moyen des exemples suivants, donnés bien entendu à titre illustratif et non limitatif de l'invention.

### EXEMPLES

### Exemple 1

Des particules de gibbsite sont synthétisées selon le mode opératoire décrit dans Journal of Colloids and Interface Science (2005, Vol. 292, Issue 2, p. 403)*.*

La purification est réalisée par dialyse et la poudre est obtenue par lyophilisation après congélation dans l'azote liquide. Une poudre blanche pulvérulente est obtenue.

L'observation par microscopie électronique donne des tailles de particules comprises entre 200 nm et 500 nm pour la surface des plaquettes, et entre 5 nm et 20 nm pour l'épaisseur des plaquettes.

Les particules sont ensuite ajoutées sous forme de poudre à 1 % massique dans une laque de protection à base de chlorure polyvinylique solubilisé dans de la méthyl éthyl cétone.

La composition de la laque est telle que son point de scellage lors d'une opération de thermo-scellage est de 58 °C.

La dispersion est réalisée dans un bain à ultrason pendant 1 heure.

Une dispersion homogène et partiellement stable est obtenue.

La formulation est ensuite enduite sur un substrat d'aluminium d'une épaisseur de 30 µm à l'aide d'une barre de mayer permettant de déposer un film liquide d'épaisseur 16 µm.

Le solvant est évaporé et le grammage de la couche de laque sèche est mesuré égal à 4 g/m².

### Exemple 2

Les particules utilisées de h-BN (nitrure de bore hexagonal) avec une morphologie plaquettaire sont disponibles dans le commerce auprès de Momentive sous la référence AC6111.

L'observation par microscopie électronique donne des tailles de particules comprises entre 200 nm et 500 nm pour la surface des plaquettes et entre 5 nm et 20 nm pour l'épaisseur des plaquettes. La surface spécifique est donnée pour 40 m²/g.

Les particules sont ajoutées sous forme de poudre à 1 % massique dans une laque de protection à base de chlorure polyvinylique solubilisé dans de la méthyl éthyle cétone.

La composition de la laque est telle que son point de scellage lors d'une opération de thermo-scellage est 58 °C.

La dispersion est réalisée dans un bain à ultrason pendant 1 heure.

Une dispersion homogène blanche, opaque et stable est obtenue.

La formulation est ensuite enduite sur un substrat d'aluminium d'une épaisseur de 30 µm à l'aide d'une barre de mayer permettant de déposer un film liquide d'épaisseur 16 µm.

Le solvant est évaporé et le grammage de la couche de laque sèche est mesuré égal à 4 g/m².

### Exemple 3 : Exemple comparatif

Une laque de protection à base de chlorure polyvinylique solubilisé dans de la méthyl éthyl cétone, telle que décrite dans l'exemple 1, ne contenant pas d'additif plaquettaire, est enduite sur un substrat d'aluminium d'une épaisseur de 30 µm à l'aide d'une barre de mayer permettant de déposer un film liquide d'épaisseur 16 µm.

Le solvant est évaporé et le grammage de la couche de laque sèche est mesuré égal à 4 g/m².

### Exemple 4 : Exemple comparatif

Les particules utilisées de gibbsite sont disponibles dans le commerce auprès d'Altéo sous la référence SH30.

L'observation par microscopie électronique donne des tailles de particules de l'ordre de 5 µm (D50) et une surface spécifique de 9 m²/g. Les particules n'ont pas une morphologie de plaquette.

Les particules sont ajoutées sous forme de poudre à 1 % massique dans une laque de protection à base de chlorure polyvinylique solubilisé dans de la méthyl éthyle cétone, telle que décrite dans l'exemple 1.

La dispersion est réalisée dans un bain à ultrason pendant 1 heure.

Une dispersion instable est obtenue.

La formulation est ensuite enduite sur un substrat d'aluminium d'une épaisseur de 30 µm à l'aide d'une barre de mayer permettant de déposer un film liquide d'épaisseur 16 µm.

Le solvant est évaporé et une couche inhomogène est obtenue du fait de la taille des objets ajoutés.

Les enductions ne peuvent en conséquence pas être testées pour déterminer l'effet sur la protection contre la corrosion.

### Exemple 5 : Exemple comparatif

Les particules utilisées de h-BN (nitrure de bore hexagonal) avec une morphologie non plaquettaire sont disponibles dans le commerce auprès de Momentive sous la référence PT100. La D10/D90 est de 7/25 µm.

L'observation par microscopie électronique donne des tailles de l'ordre de 25 µm pour la plus grande dimension et une épaisseur de l'ordre du micron. La surface spécifique est donnée pour 5 m²/g.

Les particules sont ajoutées sous forme de poudre à 1 % massique dans une laque de protection à base de chlorure polyvinylique solubilisé dans de la méthyl éthyle cétone, telle que décrite dans l'exemple 1.

La dispersion est réalisée dans un bain à ultrason pendant 1 heure.

Une dispersion instable, blanche et opaque est obtenue.

La formulation est ensuite enduite sur un substrat d'aluminium d'une épaisseur de 30 µm à l'aide d'une barre de mayer permettant de déposer un film liquide d'épaisseur 16 µm.

Le solvant est évaporé et une couche inhomogène est obtenue du fait de la taille des objets ajoutés.

Les enductions ne peuvent en conséquence pas être testées pour déterminer l'effet sur la protection contre la corrosion.

### Exemple 6 : Effet sur la protection contre la corrosion

Un test équivalent au British Standard (BS 1683:1967 et BS 1683:1987), utilisant une solution aqueuse corrosive standard contenant du sel de cuivre, du sel marin, de l'acide citrique et un tensio-actif, est réalisé sur un substrat d'aluminium de 50 cm².

La solution est mise en contact pendant 30 minutes avec chacun des substrats traités selon les exemples 1, 2 et 3, puis évacuée.

Les substrats traités selon les exemples 4 et 5 n'ont pu être testés du fait de l'inhomogénéité des couches obtenues.

Chacun des substrats est essuyé puis la quantité de trous de corrosion est dénombrée sur au moins 8 échantillons et la moyenne est calculée.

Il est à noter qu'en l'absence d'un film de laque de protection à base de chlorure polyvinylique solubilisé dans de la méthyl éthyle cétone telle que décrite dans l'exemple 1, l'exposition à la solution de test attaque complètement le substrat d'aluminium.

| **Echantillon** | **Nombre moyen de trous** | **Nombre d'enductions testées** |
|---|---|---|
| Exemple 1 | 1 | 10 |
| Exemple 2 | 1,5 | 12 |
| Exemple 3 comparatif | 3,8 | 9 |

La présence de 1 % massique des additifs plaquettaires, h-BN (nitrure de bore hexagonal) ou gibbsite, permet de diminuer significativement le nombre de trous lors d'un test standard de simulation de corrosion du substrat d'aluminium protégé par une laque. Ceci s'observe pour un grammage de laque équivalent.

A grammage équivalent, les autres propriétés de la laque enduites ne sont pas significativement affectées par la présence de 1 % massique d'additifs plaquettaires, h-BN ou Gibbsite : température de scellage, résistance du scellage, adhésion.

La viscosité de la laque est légèrement affectée (entre 180 et 240 cP à 25 °C) mais elle reste dans la gamme d'utilisation de la laque non modifiée (250 cP à 25 °C), et cela n'entraine donc pas de modification des conditions d'enduction.

## Revendications

1. Composition utile à titre de laque de protection, notamment contre la corrosion, pour des substrats à base d'aluminium, comprenant de 0,05 % à 2 % en poids d'au moins un matériau inorganique plaquettaire, par rapport à son poids total, en dispersion dans une solution comprenant au moins un vernis de thermoscellage, les plaquettes dudit matériau inorganique possédant une épaisseur nanométrique et une largeur submicronique.

2. Composition selon la revendication précédente, **caractérisée en ce qu'**elle est compatible avec une application alimentaire.

3. Composition selon l'une quelconque des revendications précédentes, **caractérisée en ce qu'**elle comprend de 0,05 % à 1,5 % en poids de matériau(x) inorganique(s) plaquettaire(s), et de préférence 1 % en poids de matériau(x) inorganique(s) plaquettaire(s), par rapport à son poids total.

4. Composition selon l'une quelconque des revendications précédentes, **caractérisée en ce que** lesdites plaquettes possèdent une épaisseur comprise entre 3 nm et 120 nm, en particulier variant de 5 nm à 30 nm, de préférence comprise entre 5 nm et 10 nm, et une largeur comprise entre 200 nm et 1 µm, en particulier comprise entre 200 nm et 900 nm, de préférence comprise entre 300 nm et 500 nm.

5. Composition selon l'une quelconque des revendications précédentes, **caractérisée en ce que** ledit ou lesdits matériau(x) inorganique(s) plaquettaire(s) possède(nt) une surface spécifique comprise entre 20 m²/g et 150 m²/g, de préférence comprise entre 30 m²/g et 70 m²/g.

6. Composition selon l'une quelconque des revendications précédentes, **caractérisée en ce que** ledit ou lesdits matériau(x) inorganique(s) plaquettaire(s) est (sont) choisi(s) parmi le nitrure de bore hexagonal, le trihydroxyde d'aluminium sous forme gibbsite et les argiles, par exemple le kaolin.

7. Composition selon l'une quelconque des revendications précédentes, **caractérisée en ce que** ledit vernis de thermoscellage est activé à une température inférieure à 100 °C, et de préférence inférieure à 70 °C, et de préférence est choisi parmi les résines ou mélange de résines d'éthylène-acétate de vinyle (EVA), les polymères et copolymères de polychlorure de vinyle, d'acide acrylique ou d'alcool polyvinylique, et en particulier est le polychlorure de vinyle.

8. Composition selon l'une quelconque des revendications précédentes, **caractérisée en ce qu'**elle comprend en outre au moins un solvant organique, de préférence au moins de la méthyl éthyl cétone, et en particulier de la méthyl éthyl cétone ou un mélange de méthyl éthyl cétone et d'acétate d'éthyle.

9. Composition selon l'une quelconque des revendications précédentes, **caractérisée en ce qu'**elle comprend en outre au moins un plastifiant, notamment un ester acide citrique-glycérol.

10. Composition selon l'une quelconque des revendications précédentes, **caractérisée en ce qu'**elle possède une viscosité comprise entre 100 cP et 300 cP, de préférence comprise entre 150 cP et 250 cP, mesurée à l'aide d'un viscosimètre de type Brookfield DVII+Pro équipé d'un mobile SC14-18.

11. Substrat à base d'aluminium, **caractérisé en ce qu'**il est revêtu en surface en tout ou partie d'une composition telle que définie selon l'une quelconque des revendications précédentes.

12. Substrat selon la revendication précédente, **caractérisé en ce qu'**il se présente sous la forme d'une feuille possédant une épaisseur comprise entre 5 µm et 50 µm, de préférence comprise entre 10 µm et 35 µm.

13. Substrat selon l'une quelconque des revendications 11 ou 12, dédié à une utilisation dans le domaine alimentaire.

14. Procédé utile pour former un revêtement de protection, notamment contre la corrosion, en surface d'un substrat à base d'aluminium, **caractérisé en ce qu'**il comprend au moins les étapes consistant à :
i) disposer d'une composition liquide comprenant de 0,05 % à 2 % en poids d'au moins un matériau inorganique plaquettaire, par rapport à son poids total, en dispersion dans une solution comprenant au moins un vernis de thermoscellage et un solvant organique, les plaquettes dudit matériau inorganique possédant une épaisseur nanométrique et une largeur submicronique ;
ii) mettre en contact ladite surface dudit substrat avec ladite composition de l'étape i) ;
iii) exposer ledit substrat obtenu à l'issue de l'étape ii) à des conditions propices à l'élimination dudit solvant organique et à la formation, à la surface dudit substrat, d'un revêtement comprenant ledit ou lesdits matériau(x) inorganique(s) plaquettaire(s).

15. Procédé selon la revendication précédente, dans lequel l'étape iii) est une étape de séchage, de préférence réalisée à une température variant de 25 °C à 60 °C, et plus particulièrement de 35 °C à 50 °C.

16. Procédé selon l'une quelconque des revendications 14 ou 15, dans lequel l'ensemble des étapes ii) et iii) est renouvelé au moins une fois à l'issue de l'étape iii).

17. Procédé utile pour former un revêtement de protection, notamment contre la corrosion, en surface d'un substrat à base d'aluminium, **caractérisé en ce qu'**il comprend au moins les étapes consistant à :
i) disposer d'au moins un matériau inorganique plaquettaire, les plaquettes dudit matériau inorganique possédant une épaisseur nanométrique et une largeur submicronique, et étant en dispersion dans au moins un solvant organique ;
ii) mettre en contact ladite surface dudit substrat avec ladite dispersion de l'étape i) ;
iii) exposer ledit substrat obtenu à l'issue de l'étape ii) à des conditions propices à l'élimination dudit solvant organique ;
iv) mettre en contact ledit substrat obtenu à l'issue de l'étape iii) avec une solution comprenant au moins un vernis de thermoscellage et un solvant organique ;
v) exposer ledit substrat obtenu à l'issue de l'étape iv) à des conditions propices à l'élimination dudit solvant organique et à la formation, à la surface dudit substrat, d'un revêtement.

18. Procédé de protection contre la corrosion d'un substrat à base d'aluminium, **caractérisé en ce qu'**il comprend au moins une étape de revêtement en surface dudit substrat par une composition telle que définie selon l'une quelconque des revendications 1 à 10.
